Europäisches Patentamt

(19) European Patent Office

Office européen des brevets

(11) Numéro de publication : **0 309 343 B1**

(12) **FASCICULE DE BREVET EUROPEEN**

(45) Date de publication du fascicule du brevet :
03.04.91 Bulletin 91/14

(51) Int. Cl.⁵ : **G01C 19/64**

(21) Numéro de dépôt : **88402378.9**

(22) Date de dépôt : **21.09.88**

(54) **Gyromètre optique actif à conjugaison de phase.**

(30) Priorité : 25.09.87 FR 8713321

(43) Date de publication de la demande :
29.03.89 Bulletin 89/13

(45) Mention de la délivrance du brevet :
03.04.91 Bulletin 91/14

(84) Etats contractants désignés :
DE ES GB IT NL SE

(56) Documents cités :
EP-A- 0 141 739
US-A- 4 396 290
US-A- 4 429 393
OPTICS LETTERS, vol. 1, no. 1, juillet 1977,
pages 16-18; A. YARIV et al.: "Amplified
reflection, phase conjugation, and oscillation
in degenerate four-wave mixing"

(72) Inventeur : Grynberg, Gilbert Lab.
Spectroscopie herzienne
Ecole Normale Sup. Univ. Pierre et Marie
Curie
F-75252 Paris (FR)
Inventeur : Pinard, Michel M. E. Lab.
Spectroscopie herzienne
Ecole Normale Sup. Univ. Pierre et Marie
Curie
F-75252 Paris (FR)
Inventeur : Faucheux, Marc André François
QUANTEL S.A
Avenue de l'Atlantique Z.A. Courtaboeuf
F-91941 Les Ulis Orsay Cedex (FR)

(74) Mandataire : Mestre, Jean et al
c/o CABINET LAVOIX 2, place d'Estienne
d'Orves
F-75441 Paris Cédex 09 (FR)

(73) Titulaire : QUANTEL S.A.
Avenue de l'Atlantique Z.A. de Courtaboeuf
BP 23
F-91941 Les Ulis Orsay Cedex (FR)

## Description

L'invention est relative aux dispositifs inertiels de mesure de rotation à l'aide d'une cavité optique résonante en anneau et concerne, plus particulièrement, les gyromètres actif en anneau où existe un milieu amplificateur, et porte notamment sur l'utilisation d'un milieu amplificateur non-linéaire à conjugaison de phase en particulier gazeux ou semi-conducteur et notamment sur la manière d'assurer dans ce cas le découplage des fréquences de deux ondes contrarotatives qui ont tendance à donner lieu à des "accrochages" dans certaines conditions.

Comme on le sait, les gyroscopes optiques à cavité résonante utilisent l'effet Sagnac. Cet effet, qui met en oeuvre un phénomène inertiel relativiste, fait que lorsque deux ondes circulent suivant un même trajet géométrique dans des sens opposés, les durées qu'elles mettent pour parcourir ce même trajet géométrique sont différentes et leur écart est fonction de la rotation du système qui porte ce trajet géométrique par rapport à un référentiel galliléen par suite de la destruction de la symétrie des chemins optiques "vus" respectivement par chacune des deux ondes.

L'article publié sous le titre "Optical Gyroscopes" par J.J. Roland et al dans la revue "Optics and laser technology" d'octobre 1981, pages 239 et s. expose brièvement la manière dont les gyroscopes optiques fonctionnent et les différentes variétés d'entre eux qui ont été mises au point.

Tous les gyroscopes optiques fonctionnent suivant le même principe.

Si l'on fait se propager dans deux sens opposés deux faisceaux de lumière cohérente suivant un même trajet géométrique fermé en anneau, une différence se manifeste entre les faisceaux, lorsque les chemins optiques tournent. Une différence de durée apparaît qui est proportionnelle à la vitesse de rotation du système par rapport à un référentiel galliléen. Cette différence de durée de parcours se traduit en différence de chemin optique, c'est-à-dire, aussi de fréquence entre les deux ondes qui se propagent dans des sens opposés. Cette différence de fréquence peut être mise en évidence en faisant interférer les deux faisceaux. On obtient alors des battements.

La formulation mathématique peut s'exprimer comme suit.

L'écart $\Delta t$ des durées de parcours, dans des sens opposés, du même trajet géométrique fermé en anneau par les deux ondes du fait de la dissymétrie induite par la rotation dans les chemins optiques qu'elles décrivent s'écrit :

$$\Delta t = 4\,S \cdot \Theta/c^2$$

où S est l'aire inscrite du trajet fermé en anneau,

$\Theta$ est la vitesse de rotation imprimé au trajet,
$\underline{c}$ est la vitesse de la lumière, d'où l'on déduit la différence de marche :

$$\Delta P = c\Delta t = 4\,S \cdot \Theta/c = 4\,S\,\Theta/\lambda\,f$$

où $\lambda$ est la longueur d'onde du faisceau et $\underline{f}$ la fréquence de résonance lorsque le système est immobile.

De même, la variation relative de différence de marche :

$$\Delta P/P = \Delta f/f$$

d'où le glissement de fréquence $\Delta f = 4\,S \cdot \Theta/\lambda\,P$.

Soit, en intégrant par rapport au temps on obtient une information digitale fonction de la rotation qui s'écrit

$$N = \int_o^t \Delta f \cdot dt = K \cdot \int_o^t \Theta \cdot dt = K.\Theta$$

On voit donc que le nombre de franges N observé est proportionnel à l'angle $\Theta$ dont a tourné le trajet géométrique c'est-à-dire le système qui le porte.

Les gyroscopes actifs en anneau à cavité résonante ont fait leur preuve mais ils ne sont pas sans présenter d'inconvénients.

Comme on le sait, lorsque la fréquence des battements des deux ondes qui interfèrent est inférieure à une certaine valeur, un couplage mutuel des deux ondes fait qu'elles se calent l'une sur l'autre et se mettent à osciller à la même fréquence, il y a "accrochage" et la différence des fréquences qui était proportionnelle à la rotation disparaît. Ceci se manifeste pour de petites vitesses de rotation et un tel gyroscope ne peut donc plus dans ce cas mettre en évidence des rotations, il devient en quelque sorte "aveugle", donc inutilisable.

Ce couplage mutuel entre les deux ondes contrarotatives est notamment dû à la rétro-diffusion introduite par les composants optiques tels les miroirs qui définissent le trajet géométrique fermé en anneau.

Le coefficient mulplificateur K est, en fait, fonction de la rotation du système et au lieu que la courbe de réponse du glissement de fréquence en fonction de la rotation soit rectiligne, elle est hyperbolique aux faibles vitesses de rotation puis redevient rectiligne aux grandes vitesses. On comprend donc qu'entre les deux valeurs limites, une pour chaque sens de rotation, qui bornent la zone "aveugle", le gyroscope est incapable de mettre en évidence une rotation du système qui le porte.

Une des solutions les plus couramment utilisées pour pallier cet inconvénient rédhibitoire, consiste à soumettre le gyroscope à des oscillations périodiques alternatives à une fréquence de l'ordre de quelques centaines de hertz. Grâce à ce palliatif, on peut obtenir une réponse qui est pratiquement linéaire pour une grande plage de fonctionnement.

Un tel balancement oscillatoire ou "biais périodique" est le plus souvent obtenu mécaniquement par exemple à l'aide de barres de torsion que l'on fait fonctionner à leur fréquence de résonance ou de miroirs "magnétiques" utilisant l'effet magnéto-optique Kerr.

Comme on le sait, les gyromètres à laser actif en anneau utilisant un milieu amplificateur qui est placé dans l'anneau et dont la mise en oeuvre fait appel à une décharge électrique dans un gaz. Il faut donc créer un champ électrique extérieur pour exciter le milieu amplificateur.

L'utilisation comme milieu amplificateur d'un gaz, le plus souvent un mélange He-Ne, excité par une décharge électrique engendre d'autres défauts de non-réciprocité suivant le sens de parcours dûs, par exemple à un alignement imparfait de la cavité résonante, à l'écoulement du gaz soumis à la décharge, à une sensibilité thermique de l'alignement et de l'écoulement. De plus l'usage d'un tel milieu fait appel à la technique du vide toujours délicate, complexe et coûteuse.

Le but de l'invention est de perfectionner les gyromètres actif en anneau en faisant en sorte que l'on n'ait plus à recourir à un balancement oscillatoire du trajet géométrique parcouru par la lumière pour permettre à l'appareil d'être sensible dans la zone "aveugle" et de manière que l'on ne soit plus obligé de mettre en oeuvre des techniques du vide et un champ électrique extérieur pour exciter le milieu amplificateur.

Suivant l'invention on utilise les propriétés de composants optiques à conjugaison de phase.

Ce type de composants optiques est décrit par exemple dans un article intitulé "Phase conjugation : reversing laser aberrations " de D.M. Pepper et al publié dans la revue "Photonics Spectra" d'août 1986 pages 95 et s.

Comme exposé dans cet article, lorsqu'une onde lumineuse d'équation

$$E = A(x, y) \exp[i(\omega t + kz + \Phi(x, y))]$$

se propageant dans la direction $\underline{z}$ est reçue par un composant optique à conjugaison de phase ce composant optique génère une onde conjuguée de l'onde incidente qui se propage dans le sens $-\underline{z}$

Une telle onde réfléchie a donc pour équation

$$E = r_c \cdot A(x, y) \exp[i(\omega t - kz - \Phi(x, y))]$$

où $r_c$ est le coefficient de réflexion par conjugaison de phase.

L'invention a pour objet un gyromètre actif en anneau qui n'utilise plus un gaz soumis à une décharge électrique extérieure mais un milieu optiquement non-linéaire qui est le siège d'un processus de mélange dégénéré à quatre ondes permettant l'auto-oscillation de deux ondes conjugées dans une cavité résonante, à partir du pompage optique par des sources laser extérieures.

Dans de nombreux milieux optiquement non-linéaires tels que des vapeurs atomiques ou des semi-conducteurs par exemple, l'interaction non-linéaire du milieu avec deux ondes de pompage se manifeste par l'absorption d'un photon de chacune des deux ondes de pompage et par l'émission de deux photons se propageant en sens opposé et conjugués l'un de l'autre. Quand un tel milieu optiquement non-linéaire de largeur de gain $\Delta\omega_g$ est enfermé dans une cavité résonante linéaire de largeur de pic de résonance $\Delta\omega_c$ ce processus d'émission d'un couple de photons donne lieu à un phénomène d'auto-oscillation de la cavité à une fréquence coïncidant avec la fréquence des ondes de pompage. Le milieu optiquement non-linéaire est utilisé lui-même comme milieu amplificateur puisqu'il permet lors du mélange à quatre ondes des gains supérieurs à l'unité pour les deux ondes contrarotatives se propageant dans la cavité.

Si l'on place dans une cavité résonante en anneau un milieu qui conjugue la phase on peut montrer, pour des cavités et des milieux vérifiant la condition $\Delta\omega_g >> \Delta\omega_c$ par des développements mathématiques, qu'en l'absence de toute rétro-diffusion, la différence des fréquences d'oscillation des deux ondes se propageant dans des sens opposés est égale à la différence des fréquences propres d'oscillations de la cavité pour les deux sens de rotation. Cette condition $\Delta\omega_g >> \Delta\omega_c$ ne peut être obtenue avec des milieux optiquement non-linéaires à conjugaison de phase du type photoréfractif.

Si les ondes $E_+$ et $E_-$ se propageant dans l'anneau ont pour fréquences respectives $\omega_+$ et $\omega_-$ et si $\Omega_+$ et $\Omega_-$ désignent les fréquences propres de la cavité résonante pour les deux sens de rotation, cette relation s'écrit :

$$\omega_+ - \omega_- = \Omega_+ - \Omega_-$$

En pratique, la rétro-diffusion des miroirs mélange les deux sens de propagation et il y a "accrochage" des fréquences qui deviennent alors égales à la fréquence des ondes de pompages.

Suivant l'invention on utilise le même milieu optiquement non-linéaire pour produire une différence de chemins optiques entre les deux ondes contrarotatives en se servant de deux ondes de pompage de fréquences égales mais d'intensités différentes où l'effet de biais périodique est obtenu par une modulation de la différence des intensités.

Le milieu optiquement non-linéaire siège d'un mélange dégénéré à quatre ondes, lorsqu'il est constitué d'une vapeur atomique et d'un gaz tampon permet de modifier différemment les chemins optiques selon les deux sens de propagation et permet donc alors de réaliser ainsi optiquement et non plus mécaniquement un biais pour s'affranchir de la zone "aveugle".

En effet, en présence de relaxations telles que des collisions, l'indice non-linéaire du milieu "vu" par chacune des deux ondes qui se déplacent en sens opposés dépend différemment des intensités propres aux deux ondes de pompage.

Si l'on désigne par $n_+^*$ et $n_+^*$ les indices non-linéaires du milieu "vu" respectivement par les ondes $E_+$ et $E_-$ et par $I_1$ et $I_2$ les intensités des ondes de pompage $E_1$ et $E_2$, ces relations s'écrivent

$$N_+^* = \alpha\, I_1 + \beta\, I_2$$

$$n_+^* = \alpha\, I_2 + \beta\, I_1$$

dans le cas où les intensités des ondes $E_+$ et $E_-$ sont relativement petites pour ne pas contribuer à l'indice non-linéaire $n^*$.

Cette asymétrie dans le cas d'une vapeur résulte d'un déphasage par effet Doppler qui fait que les réseaux créés par les ondes $E_+$ et $E_1$ d'une part et $E_+$ et $E_2$ d'autre part respectivement ont des durées de vie différentes.

On voit donc que la différence de marche due à la différence des longueurs des chemins optiques selon les deux sens de rotation est proportionnelle à :

$$\Delta P = (\alpha - \beta)\,(I_1 - I_2)$$

On peut donc rendre la différence des fréquences $\Delta f = \omega_+ - \omega_- = \Omega_+ - \Omega_-$ suffisamment grande pour sortir de la zone "aveugle".

On voit donc que grâce à cette utilisation suivant l'invention d'un milieu optiquement non-linéaire qui sert à la fois de milieu amplificateur et de milieu à conjugaison de phase, on peut réaliser un "biais" purement optique.

Suivant l'invention ce "biais" est rendu alternatif et symétrique par rapport à la zone du couplage des deux ondes dans la cavité en faisant varier l'intensité particulière de chacune des deux ondes de pompage à l'aide de modulateurs acousto-optiques ou de cristaux électro-optiques.

Outre la suppression des problèmes liés à l'existence du "biais" périodique ou basculement oscillatoire mécanique ou magnéto-optique, l'invention permet aussi de modifier facilement la loi de la différence ($I_1 - I_2$) et donc en particulier de réduire considérablement la durée de passage par la zone "aveugle".

L'invention a pour objet un gyromètre actif en anneau à conjugaison de phase qui comprend une cavité résonante où est placée une cellule contenant un milieu optiquement non-linéaire amplificateur et d'où sont engendrées des ondes contrarotatives, une source laser de pompage, un dispositif optique pour irradier par deux faisceaux le milieu optiquement non-linéaire à l'aide de la source laser de pompage, un système optique pour faire interférer les ondes contrarotatives et un détecteur de battements.

Un tel gyromètre actif en anneau résonant est notamment caractérisé en ce que les deux faisceaux laser de pompage sont des faisceaux colinéaires et de sens opposés pour irradier le milieu et en ce que des modulateurs d'intensité sont placés sur les deux faisceaux des deux sources de pompage.

D'autres caractéristiques de l'invention ressortiront de la lecture de la description et des revendications qui suivent et de l'examen du dessin annexé, donné seulement à titre d'exemple, où :
- les Fig.1A, 1B et 1C illustrent les problèmes liés au couplage mutuel dû à un phénomène d'"accrochage" dans la cavité résonante qui fait apparaître la zone "aveugle" ;
- la Fig.2 est une vue schématique d'un mode de réalisation d'un gyromètre actif en anneau résonant suivant l'invention ;
- la Fig.3 est une vue de détail d'une autre configuration d'un gyromètre suivant l'invention ; et
- les Fig.4A et 4B sont des courbes illustrant l'incidence des intensités relatives des faisceaux de pompages $I_1$ et $I_2$ sur les intensités et les fréquences des ondes contrarotatives, respectivement.

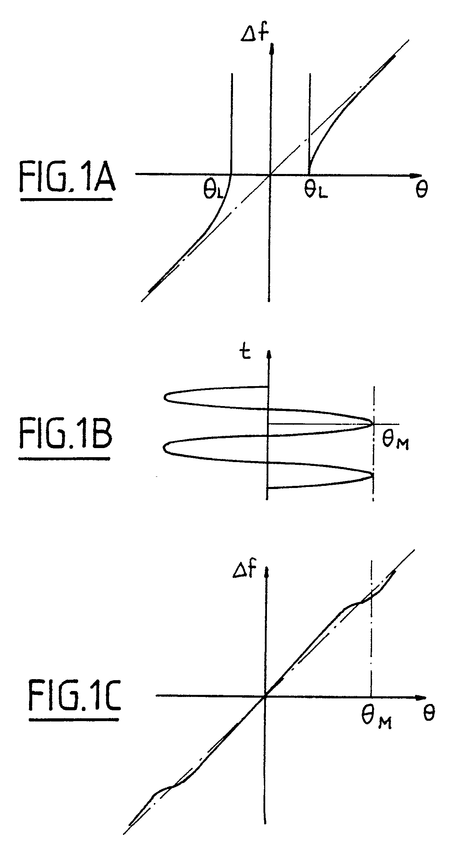

La Fig. 1A illustre le glissement de fréquence $\Delta f$ entre les deux ondes circulant dans des sens opposés dans l'anneau du gyromètre, portée en ordonnée, en fonction de la vitesse angulaire $\Theta$ de rotation de ce dernier, portée en abscisse ; la droite en trait discontinu représente la réponse théorique linéaire en l'absence d'"accrochage" et les branches hyperboliques en trait continu représentent la réponse réelle résultant du couplage mutuel où la zone "aveugle" est bornée par les valeurs limites $\Theta_L$.

La Fig.1B illustre le balancement oscillatoire ou "biais périodique" imprimé au gyromètre pour s'affranchir de l'existance de la zone "aveugle" où l'oscillation périodique est portée en abscisse et le temps en ordonnée, l'élongation maximale $\Theta_M$ étant supérieure à $\Theta_L$.

La Fig.1C illustre en trait continu la réponse réelle du gyromètre en présence d'un "biais périodique", la réponse théorique étant ici encore représentée par une droite en trait discontinu.

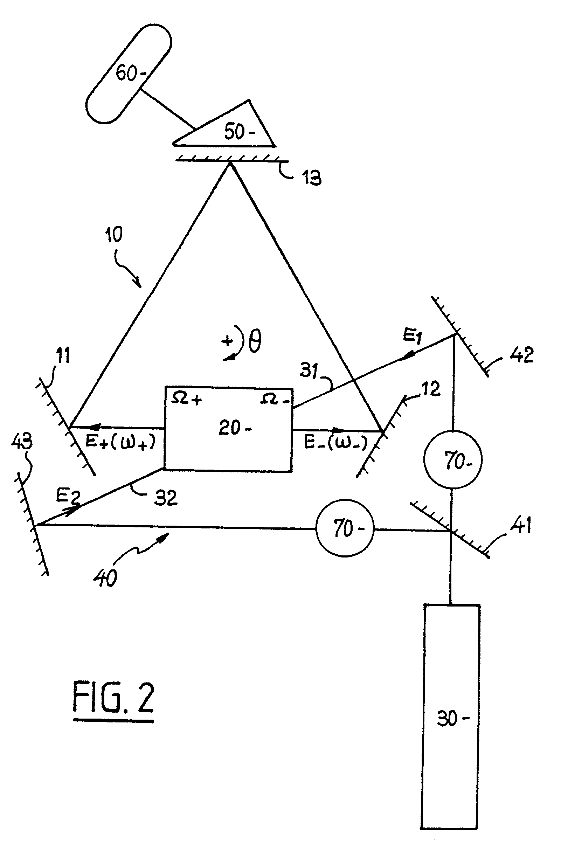

En se reportant à la Fig.2 schématique, on voit qu'un mode de réalisation d'un gyromètre actif en anneau résonant à conjugaison de phase selon l'invention comprend, essentiellement, un trajet géométrique formant une cavité résonante 10, délimité par au moins trois miroirs 11, 12, 13 dont au moins un est partiellement transparent ; dans ce mode de réalisation le miroir 13.

Sur ce trajet 10 ou cavité résonante se trouve un milieu optiquement non-linéaire dans une cellule 20 qui émet deux ondes contrarotatives $E_+$ et $E_-$ lorsqu'il est excité. Ce milieu est choisi de manière à ce qu'il se mette à émettre en se déclenchant sur son propre bruit de fond, des ondes $E_+$ et $E_-$ de fréquence $\omega_+$ et $\omega_-$ respectivement qui auto-oscillent dans la cavité dont les fréquences propres sont $\Omega_+$ et $\Omega_-$.

Ce milieu optiquement non-linéaire est irradié par deux faisceaux laser de pompage 31 et 32, colinéaires ; les ondes de pompage $E_1$ et $E_2$ sont d'intensité respectives $I_1$ et $I_2$.

Ces faisceaux 31 et 32 sont obtenus par exemple à partir d'un laser 30 dont le rayonnement est reçu par un dispositif optique 40 constitué par exemple d'une lame semi-transparente 41 et de deux miroirs 42 et 43 et divisé comme illustré sur la Fig.2.

Les ondes contrarotatives $E_+$ et $E_-$ reçues par le miroir semi-transparent 13 parviennent à un dispositif optique 50, de tout type classique convenable, par exemple un prisme adapté, où elles interfèrent.

Un détecteur 60 sensible aux battements, comme exposé, permet par intégration, de déterminer et calculer l'angle de la rotation du gyromètre. Ceci est classique.

Sur l'un au moins des faisceaux de pompage 31 et 32 est placé un modulateur d'intensité 70 qui permet de modifier l'intensité $I_1$ et/ou $I_2$ des ondes de pompage $E_1$ et $E_2$.

Dans un mode de réalisation le milieu optiquement non-linéaire irradié par les deux faisceaux laser de pompage colinéaires où se fait le mélange à quatre ondes est constitué de sodium avec un gaz tampon, ici de l'hélium à la pression de 0,4 kPa environ. Ce milieu est contenu dans la cellule 20 placée dans la cavité résonante 10 et maintenue à environ 160°C. Cette cellule est faite en quartz et est fermée par des fenêtres à l'incidence de Brewster.

Deux faisceaux de pompage 31 et 32 d'une puissance de 300 mW et de longueur d'onde 589 nm sont obtenus par exemple à partir d'un laser 30 à colorant pompé par un laser à l'Ar⁺. Ces deux faisceaux colinéaires font un petit angle, de l'ordre du centième de radian, avec l'axe de la cavité 10. La fréquence de ces faisceaux est très proche d'une fréquence de résonance du milieu par exemple quelques gigahertz.

Le ou les modulateurs 70 sont par exemples des densités optiques continuement variables.

Dans ce qui précède le milieu optiquement non-linéaire où se fait le mélange quasi dégénéré à quatre ondes est constitué de vapeurs de Na et d'He. On peut utiliser d'autres métaux alcalins tels le Cs ($\lambda$ : 850 nm) et le Ru ($\lambda$ : 780 nm) mélangés à un autre gaz rare tel le He ou bien aussi du Ne ou Kr, qui sont actifs pratiquement à la température ambiante compte tenu des faibles densités nécessaires. Ces matériaux présentent de plus l'avantage de pouvoir être pompés par des diodes laser du commerce.

Au lieu d'utiliser un tel milieu gazeux on peut se servir d'un milieu semi-conducteur tel que As-Ga, In-Sb pour faire le mélange à quatre ondes.

Au lieu d'utiliser un laser à colorant pour produire les faisceaux de pompage, on peut se servir de diodes laser du type AlGaAs.

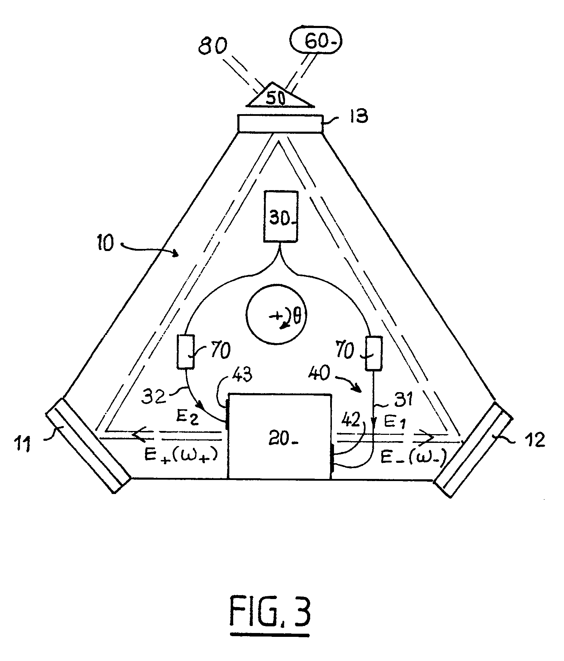

C'est ce qui est illustré sur la Fig.3 où les composants homologues à ceux de la Fig.2 sont repérés par les mêmes numéros de références. Le dispositif optique 40 d'irradiation du milieu optiquement non-linéaire à l'aide d'une diode laser est alors constitué de fibres optiques non référencées et les modulateurs d'intensité 70 sont, par exemple, des modulateurs acousto-optiques.

Pour le reste le gyromètre actif en anneau résonant suivant l'invention est classique et fait donc appel à des solutions courantes connues du spécialiste du secteur technique considéré. Par exemple, et seulement à titre illustratif, le gyromètre est monté sur un socle non référencé à grande stabilité dimensionnelle tel un matériau "Zerodur" et les miroirs 11 et 12 de l'anneau sont des miroirs associés à des céramiques piézo-électriques. De même, le système optique 50 pour faire interférer les ondes contrarotatives, par exemple un prisme comme illustré notamment sur la Fig.3 comprend une "sortie" 80 pour prélever un signal d'asservissement de la longueur du trajet géométrique de l'anneau.

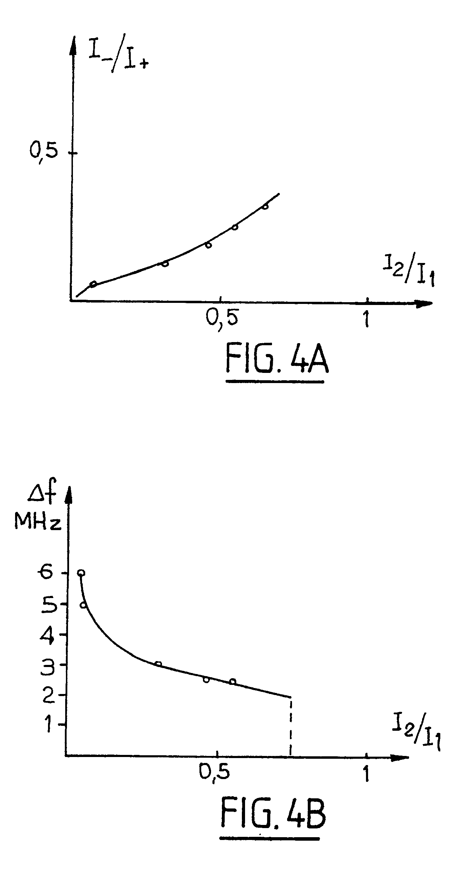

La Fig. 4A illustre l'action de la modulation relative des intensités $I_1$ et $I_2$ des ondes $E_1$ et $E_2$ des faisceaux de pompage 31, 32 colinéaires sur les intensités $I_+$ et $I_-$ des ondes $E_+$ et $E_-$ contrarotatives.

La Fig.4B illustre le glissement de fréquence $\Delta f$ entre les fréquences $\omega_+$ et $\omega_-$ des ondes $E_+$ et $E_-$ contrarotatives obtenu grâce au gyromètre actif en anneau résonnant selon l'invention.

De ce qui précède on voit tous les avantages apportés par le gyromètre actif en anneau résonant à conjugaison de phase suivant l'invention.

On a supprimé les difficultés engendrées par l'existence d'une décharge électrique. Ceci élimine les instabilités induites par l'écoulement gazeux quelle qu'en soit l'origine, notamment thermique et électrique, et assure ainsi une longévité accrue des miroirs et dispense aussi de recourir à la technologie complexe du "vide" qui pose notamment des problèmes relatifs à l'étanchéité, à l'adhérence optique.

On a supprimé le "biais" périodique ou balancement oscillatoire mécanique. Ceci élimine des problèmes d'usinage, de montage, de réglage et d'entretien.

Le gyromètre actif en anneau résonant à conjugaison de phase suivant l'invention ne comprend que des éléments solides et est d'une mise en route quasi instantanée sans régime transitoire ; il présente une meilleure stabilité du "faux zéro" par suite de la suppression des phénomènes liés à l'écoulement gazeux, et fonctionne avec un très faible couplage et un très petit niveau de bruit de type "marche au hasard" associé à la traversée périodique de la zone "aveugle".

Le gyromètre actif en anneau résonant à conjugaison de phase suivant l'invention est, de plus, insensible aux accélérations. Ceci permet d'obtenir un "biais" périodique d'allure non plus "sinusoïdale" mais en "créneau", avec un front raide ce qui réduit encore, voire annule, les erreurs à l'inversion du sens du balancement oscillatoire, du fait d'un changement de sens relativement brutal et non plus progressif, car le "biais" périodique obtenue optiquement et non plus mécaniquement n'est pas soumis aux problèmes d'inertie. On peut obtenir ceci par la modulation acousto-optique ou électro-optique de la différence des intensités des faisceaux de pompage colinéaires.

Le gyromètre actif en anneau résonant à conjugaison de phase suivant l'invention est d'un coût de construction et d'entretien moindre que les gyromètres classiques et est d'une fiabilité bien meilleure, le taux de panne étant infime.

## Revendications

1. Gyromètre actif en anneau à conjugaison de phase qui comprend un trajet géométrique fermé par au moins trois miroirs (11, 12, 13) formant une cavité résonante (10) dans laquelle est placée une cellule (20) contenant un milieu optiquement non-linéaire permettant par mélange à quatre ondes l'autooscillation cohérente de deux ondes contrarotatives conjuguées l'une de l'autre, deux faisceaux laser (31, 32) de pompage, un dispositif optique (40) pour irradier le milieu de la cavité (20) à l'aide des deux faisceaux laser (31, 32) de pompage, un système optique (50) pour faire interférer les deux ondes contrarotatives et un détecteur (60) de battements, caractérisé en ce que les deux faisceaux laser (31, 32) de pompage laser sont colinéaires et de sens opposés et en ce qu'au moins un modulateur d'intensité (70) est placé sur l'un des faisceaux laser (31, 32) de pompage.

2. Gyromètre selon la revendication 1, caractérisé en ce que les faisceaux (31, 32) ont une fréquence très proche d'une fréquence de résonance du milieu optiquement non-linéaire.

3. Gyromètre selon la revendication 1 ou 2, caractérisé en ce que le milieu optiquement non-linéaire est une vapeur atomique par exemple de sodium mélangée à un gaz rare par exemple de l'hélium afin de s'affranchir de la génération d'une décharge électrique extérieure.

4. Gyromètre selon la revendication 1 ou 2, caractérisé en ce que le milieu optiquement non-linéaire est un semi-conducteur.

5. Gyromètre selon l'une quelconque des revendications 1 à 4, caractérisé en ce que le modulateur d'intensité (70) est un composant acousto-optique ou électro-optique.

6. Gyromètre selon l'une quelconque des revendications 1 à 5, caractérisé en ce que le dispositif optique (40) pour irradier le milieu de la cavité (20) est une combinaison de miroirs (42, 43) et de lame semi-transparentes (41).

7. Gyromètre selon l'une quelconque des revendications 1 à 6, caractérisé en ce que le dispositif optique (40) pour irradier le milieu de la cavité (20) comprend des fibres optiques.

8. Gyromètre selon l'une quelconque des revendications 1 à 7, caractérisé en ce que le système optique (50) pour faire interférer les ondes contrarotatives est un prisme.

9. Gyromètre selon l'une quelconque des revendications 1 à 8, caractérisé en ce que le trajet (10) est délimité par au moins trois miroirs (11, 12, 13) dont l'un (13) d'eux est partiellement transparent.

10. Gyromètre selon l'une quelconque des revendications 1 à 9, caractérisé en ce que les faisceaux (31, 32) de pompage sont obtenus à partir d'un laser (30) à colorant, à solides, à gaz ou à semi-conducteur tel qu'une diode laser.

11. Gyromètre selon l'une quelconque des revendications 1 à 10, caractérisé en ce que le système optique (50) comprend une "sortie" (80) pour obtenir un signal d'asservissement de la longueur du trajet (10).

12. Gyromètre selon l'une quelconque des revendications 1 à 11, caractérisé en ce que la largeur de gain du milieu optiquement non-linéaire contenue dans la cellule (20) est très grande relativement à la largeur de pic de résonance de la cavité résonante (10).

## Ansprüche

1. Aktiver optischer Kreisel mit Phasenkonjugation mit einem Strahlengang, welcher durch mindestens drei Spiegel (11, 12, 13) abgeschlossen ist, welche einen Hohlraumresonator (10) bilden, in dem sich eine Zelle (20) befindet, welche ein optisches nicht-lineares Medium enthält, welches durch Mischen von vier Wellen die kohärente Eigenschwingung von zwei gegenläufigen konjugierten Wellen ermöglicht, mit zwei Pumplaserstrahlen (31, 32), mit einer optischen Vorrichtung (40) zum Bestrahlen des Mediums in der Zelle (20) mit Hilfe der zwei Pumplaserstrahlen (31, 32), mit einer Optik (50) zum Überlagern der zwei gegenläufigen Wellen und mit einem Überlagerungs-Detektor (60), **dadurch gekennzeich-**

net, daß die beiden Pumplaserstrahlen (31, 32) kolinear sind und in gegenläufiger Richtung verlaufen, und daß mindestens ein Intensitätsmodulator (70) für einen der Pumplaserstrahlen (31, 32) vorgesehen ist.

2. Optischer Kreisel nach Anspruch 1, dadurch gekennzeichnet, daß die Strahlen (31, 32) eine Frequenz besitzen, die sehr nahe an der Resonanzfrequenz des optischen nicht-linearen Mediums liegt.

3. Optischer Kreisel nach Anspruch 1 oder 2, dadurch gekennzeichnet, daß das optische nicht-lineare Medium ein Atomdampf ist, beispielsweise mit einem Edelgas, z.B. Helium, vermischtes Natrium, zur Erzeugung einer äußeren elektrischen Entladung.

4. Optischer Kreisel nach Anspruch 1 oder 2, dadurch gekennzeichnet, daß das optische nicht-lineare Medium ein Halbleiter ist.

5. Optischer Kreisel nach einem der Ansprüche 1-4, dadurch gekennzeichnet, daß der Intensitätsmodulator (70) ein akusto-optisches oder elektro-optisches Bauteil ist.

6. Optischer Kreisel nach einem der Ansprüche 1-5, dadurch gekennzeichnet, daß die optische Vorrichtung (40) zum Bestrahlen des Mediums in der Zelle (20) eine Kombination aus Spiegeln (42, 43) und einr halbdurchlässigen Platte (41) ist.

7. Optischer Kreisel nach einem der Ansprüche 1-6, dadurch gekennzeichnet, daß die optische Vorrichtung (40) zum Bestrahlen der Zelle (20) Lichtwellenleiter aufweist.

8. Optischer Kreisel nach einem der Ansprüche 1-7, dadurch gekennzeichnet, daß die Optik (50) zum Überlagern der gegenläufigen Wellen ein Prisma ist.

9. Optischer Kreisel nach einem der Ansprüche 1-8, dadurch gekennzeichnet, daß der Resonator (10) durch mindestens drei Spiegel (11, 12, 13) abgegrenzt ist, von welchen einer (13) teildurchlässig ist.

10. Optischer Kreisel nach einem der Ansprüche 1-9, dadurch gekennzeichnet, daß die Pumpstrahlen (31, 32) von einem Farbstofflaser (30), Festkörperlaser (30), Gaslaser (30) oder Halbleiterlaser (30), z.B. eine Laserdiode, erzeugt werden.

11. Optischer Kreisel nach einem der Ansprüche 1-10, dadurch gekennzeichnet, daß die Optik (50) einen "Ausgang" (80) aufweist, um ein Regelungssignal für die Länge des Resonators (10) zu erhalten.

12. Optischer Kreisel nach einem der Ansprüche 1-11, dadurch gekennzeichnet, daß die Verstärkungsbandbreite des optischen nicht-linearen Mediums in der Zelle (20) im Verhältnis zur Resonanzbandbreite des Hohlraumresonators (10) sehr groß ist.

## Claims

1. Active phase conjugation ring gyrometer which comprises a geometrical path closed by at least three mirrors (11, 12, 13) forming a resonant cavity (10) in which is placed a cell (20) containing an optically non-linear medium permitting by four-wave mixing the coherent auto-oscillation of two conjugate counter-rotative waves, two pumping laser beams (31, 32), an optical device (40) for irradiating the medium of the cavity (20) by means of the two pumping laser beams (31, 32), an optical system (50) for causing interference of the two counter-rotative waves and a beat detector (60), characterised in that the two laser pumping laser beams (31, 32) are colinear and in opposite directions, and in that at least one intensity modulator (70) is placed on one of the pumping laser beams (31, 32).

2. Gyrometer according to Claim 1, characterised in that the beams (31, 32) have a frequency which is very close to a resonance frequency of the optically non-linear medium.

3. Gyrometer according to Claim 1 or 2, characterised in that the optically non-linear medium is an atomic vapour, for example sodium vapour, mixed with a rare gas, for example helium, in order to avoid the generation of an exterior electrical discharge.

4. Gyrometer according to Claim 1 or 2, characterised in that the optically non-linear medium is a semiconductor.

5. Gyrometer according to any one of Claims 1 to 4, characterised in that the intensity modulator (70) is an acousto-optical or electro-optical component.

6. Gyrometer according to any one of Claims 1 to 5, characterised in that the optical device (40) for irradiating the medium of the cavity (20) is a combination of semi-transparent mirrors (42, 43) and blade (41).

7. Gyrometer according to any one of Claims 1 to 6, characterised in that the optical device (40) for irradiating the medium of the cavity (20) comprises optical fibres.

8. Gyrometer according to any one of Claims 1 to 7, characterised in that the optical system (50) for causing the counter-rotative waves to interfere is a prism.

9. Gyrometer according to any one of Claims 1 to 8, characterised in that the path (10) is defined by at least three mirrors (11, 12, 13), one (13) of which mirrors is partially transparent.

10. Gyrometer according to any one of Claims 1 to 9, characterised in that the pumping beams (31, 32) are obtained from a dye, solid, gas, or semiconductor laser (30) such as a laser diode.

11. Gyrometer according to any one of Claims 1 to 10, characterised in that the optical system (50) comprises an "output" (80) for obtaining a signal controlling the length of the path (10).

12. Gyrometer according to any one of Claims 1 to 11, characterised in that the gain width of the optically non-linear medium contained in the cell (20) is very large relative to the resonance peak width of the resonant cavity (10).

FIG.1A

FIG.1B

FIG.1C

FIG. 2

FIG. 3

FIG. 4A

FIG. 4B